# EUROPEAN PATENT SPECIFICATION

(11) **EP 1 329 364 B1**
(45) Date of publication and mention of the grant of the patent: **09.08.2006**
(21) Application number: 03396004.8
(22) Date of filing: 10.01.2003
(51) Int. Cl.: B60R 19/56

(54) **Side valance system**
Seitliches Fahrschutzsystem
Système de protection latérale

(30) Priority: 10.01.2002 FI 20020047
(43) Date of publication of application: 23.07.2003
(73) Proprietor: OY PARLOK AB, 21600 Parainen (FI)
(72) Inventor: Sillantaka, Kari, 23800 Laitila (FI); Jukakoski, Roni, 20810 Turku (FI)
(74) Representative: Maskula, Silla Marjatta

(56) References cited:
- EP-A- 1 026 045
- DE-A- 4 324 803

## Description

The invention relates to a side valance system to be arranged alongside a vehicle and to a method for locking it in a driving position, as set forth in the preamble of the independent claims described further. More specifically, the invention concerns a side valance system to be arranged alongside a truck or the like large wheel diameter vehicle and, if desired, movable in order to obtain easier access under the vehicle.

The purpose of a side valance system attached to a truck or the like vehicle is to prevent for example people from falling accidentally under the vehicle. The purpose of a side valance system is particularly to protect pedestrians, cyclists or the like from being injured by the wheels of a truck. Side valance systems are subject to various regulations, for example in the EU the bottom edge of a side valance system attached along the sides of a truck is allowed to be no more than 550 mm from the ground and the top edge no more than 350 mm from the side of a truck platform. However, the side valance system should be preferably removable for allowing access under the vehicle, if desired, e.g. for reasons of maintenance. Also, for example on trains carrying trailer trucks, side valance systems must often be lifted upward to accommodate a locking mechanism fitted under the trailer trucks carried on railway cars.

United States patent publication US 4060268 discloses a typical prior art guard rail device mounted alongside a truck. It consists of braces attached to the underside of a truck. The height of the guard rail from the ground is made adjustable by varying the position of bolts attaching the braces to each other. For easier access under the vehicle, e.g. for maintenance, this type of guard rail or at least parts thereof must be removed completely.

Published European patent application EP 0857620 A describes a side valance system, having a valance which is plate-like and elongated in the direction of a vehicle. The valance panel is pivotally mounted to open outwards on hinges in its upper portion. As the valance is in an opened condition, e.g. for maintenance, its edge extends beyond what is the width of a vehicle in driving condition. In order to prevent it from opening while the vehicle is running, the valance panel is secured at its bottom edge to its support members by means of a special locking element.

Published European patent application EP 1 026 045 A2 describes a side valance system according to the preamble of claim 1 to be arranged alongside a vehicle. This system comprises a protection plate and support means. The protection plate is arranged to be pivotable relative to the support means by means of a longitudinal hole arranged in the support means and first pin elements arranged in the protection plate. A separate locking element is formed by means of an open U-shaped groove in the support means and second pin elements arranged in the protection plate.

German utility model DE 9113088 U discloses a side valance system, wherein the protection panel is pivotally mounted on a hinge for two different positions, i.e. alongside a vehicle for a so-called driving position, i.e. to block access under the vehicle, and, on the other hand, for a maintenance position underneath a vehicle, i.e. to provide access under the vehicle. In this system, holding the side valance system in both driving and maintenance positions requires separate locking elements.

All movable prior known side valance systems for a vehicle require separate locking elements, such as latches, bolts and nuts, and the like, for holding the valance in a driving position, i.e. for blocking unwanted access under the vehicle. Such separate clamps are highly susceptible to damage and jamming. Neither do the prior known solutions provide a convenient possibility for removing the protection panel completely from its support structure. Installation of the prior known protection panels and the like is an arduous process. Vertical adjustment of the prior art side valance systems from the ground is often troublesome and the pivotal movement to a maintenance position is a complicated process.

It is an object of the present invention to reduce or even eliminate some of the foregoing problems appearing in the prior art.

A particular object of the present invention is to provide a side valance system to be arranged alongside a vehicle, especially a truck or the like, which is movable between a driving position blocking access under the vehicle and a maintenance position providing access under the vehicle, and which is reliable in operation and easy to use.

In order to achieve, among others, the foregoing objectives, the side valance system and the method according to the invention is characterized by what is set forth in the characterizing part of the appended independent claims.

Advantages and alternative embodiments mentioned in this text relate, when applicable, to both the side valance system and the method, even though this is not always specifically mentioned under every alternative and advantage.

A typical preferred side valance system of the invention to be arranged to the side of a vehicle comprises a protection means, such as an elongated plate or beam, which is adapted to block unintentional access under the vehicle. A typical side valance system comprises also support means to be connected to the vehicle and to the protection means, supported by which the protection means is movable between at least two different positions. These two positions are:
- a driving position, where the protection means are arranged alongside a vehicle for blocking access under the vehicle, and
- a maintenance position, where the protection means are arranged essentially for providing access under the vehicle.
Typical support means comprise at least a hinge element and a counter-element therefor, which are mounted pivotally with respect to each other for moving the protection means relative to the vehicle. The hinge element refers to any appropriate element, which is adapted to pivot against and relative to its counter-element. The hinge element can be for example a journal, which is arranged pivotally in a recess formed in its counter-element. The support means comprise generally various prior known beams or other such elements set underneath a vehicle, to which the hinge element or its counter-element is attached. A typical counter-element of the invention is provided with an abutment surface, such as a groove or a channel, in which or along which the hinge element is adapted to be movable relative to the counter-element between at least two positions, i.e.
- a pivoting position, where the hinge element is pivotable relative to the counter-element and thus said protection means is also pivotable relative to the vehicle, as well as
- a locking position, where the hinge element is set during the driving position and where pivoting of the hinge element relative to the counter-element and, thus, said pivoting of the protection means as well, is prevented by means of a locking shape formed in the counter-element and/or in the hinge element.
In other words, shifting a typical inventive hinge element and its counter-element relative to each other into the locking position enables locking of the same in the driving position by virtue of a special design thereof providing the locking action. Thus, the locking does not require special bolts, nuts, latches or other separate locking elements.

In the side valance system according to the invention, said locking profile comprises awedge surface that is arranged on the abutting surface of the counter-element, along which abutting surface the hinge element is arranged to be movable, whereby the prevention of the pivotal movement of the hinge element and the counter-element in the locking position is arranged by wedging. Wedging is a simple and reliable way of fastening components to each other.

In a particularly preferred side valance system of the invention, the hinge element is at a lower level in the locking position than in the pivoting position, and the hinge element is adapted to remain in the locking position gravitationally, with the protection means thus locked in the driving position. Gravity has been determined to provide a sufficient force for keeping the side valance system locked in the driving position.

In a highly preferred side valance system of the invention, the abutting surface is partially open, such that in the pivoting position the hinge element is releasable from the abutting surface and from the counter-element for setting the protection means in the maintenance position. Hence, the abutment surface of the counter-element does not need to be a closed, hinge element enclosing opening, groove, or channel, in which the hinge element can be manipulated. Preferably, the abutting surface is partially open, such that in the pivoting position the hinge element is completely releasable from the abutting surface and from the counter-element in order to enable a complete removal of the protection means from the vehicle, if desired. An open abutting surface allows manipulation of the protection means more freely relative to support means, and thus relative to the vehicle, and hence facilitates mounting and dismounting of the protection means.

The hinge element according to the invention can have at least one at least mainly planar surface, which surface is arranged against the abutting surface of the counter-element in the locking position. By means of such plain surface, the locking according to the invention can easily be arranged to be robust and yet easy to open. The side valance system being in the locking position, said surface advantageously forms an angle with the vertical, which angle typically is less than 45 degrees, preferably 1 - 40 degrees, more preferably 5 - 30 degrees or 15 - 25 degrees. Wedging by means of this kind of angle is efficient and secure. At the same time gravitation effect on the locking can easily and efficiently made use of.

In a preferred side valance system of the invention, the counter-element is attached securely to the chassis of a vehicle, for example to support beams underneath the platform of a truck, and the hinge element is attached securely to the protection means. This results in a reliable and robust side valance system. The embodiment will be particularly preferable if its counter-element is provided with a wedge surface, which in the driving position forces the hinge element, and thus also the protection means, towards the vehicle. Consequently, the counter-element is at the same time wedged against the protection means. A result of this is a particularly steady driving position.

In a preferred side valance system of the invention, the counter-element is secured by means of a fastening element, such as bolts and nuts, removably to the chassis and the counter-element is provided with a number of attachment points for the fastening element set at various heights for adjusting a vertical distance between the protection means and the ground. Naturally, the chassis can also be provided with a number of attachment points at various heights. This type of solution is a simple and secure way of providing vertical adjustment for the protection means.

A preferred counter-element of the invention is in the shape of a plate-like element set perpendicularly to the travelling direction of a vehicle, against the edge of which the protection means is supported in the driving or maintenance position, or during a relative movement therebetween. If the plate has its edges bent over at least a portion of the section adapted to support the protection means, the abutment surface between the counter-element and the protection means can be made wider and, consequently, the structure becomes steadier.

Regarding its shape, a preferred counter-element of the invention is substantially symmetrical relative to a horizontal plane extending through the counter-element which is in the driving position. This facilitates installation of a counter-element as there is no need for an installer to contemplate which way the element should be installed.

A preferred protection means of the invention is plate-like, since in a preferred side valance system of the invention, the protection means is sort of slid along support means between driving and maintenance positions. A preferred plate-like protection means is substantially smooth over its surface set against support means, such that the protection means does not have protrusions or gaps interfering with said sliding.

The invention will now be described in more detail with reference to the accompanying drawing, in which
Figure 1 shows schematically a side valance system of the invention in the maintenance position,
Figure 2 shows schematically the side valance system of Figure 1 in the pivoting position,
Figure 3 shows schematically the side valance system of Figure 1 in the driving position,
Figure 4 shows schematically the side valance system of Figure 1 in a variety of positions,
Figure 5 shows schematically another counter-element, a hinge element, and a protection means for a side valance system according to the invention in an enlarged view,
Figure 6 shows schematically a cross-section of a rail member for the side valance system of Figure 1,
Figure 7 shows schematically a perspective view of a third counter-element, hinge element and rail member in the driving position,
Figure 8 shows schematically a side view of the case in Figure 7, and
Figure 9 shows schematically a cross section of the rail member of the side valance system of Figure 7.

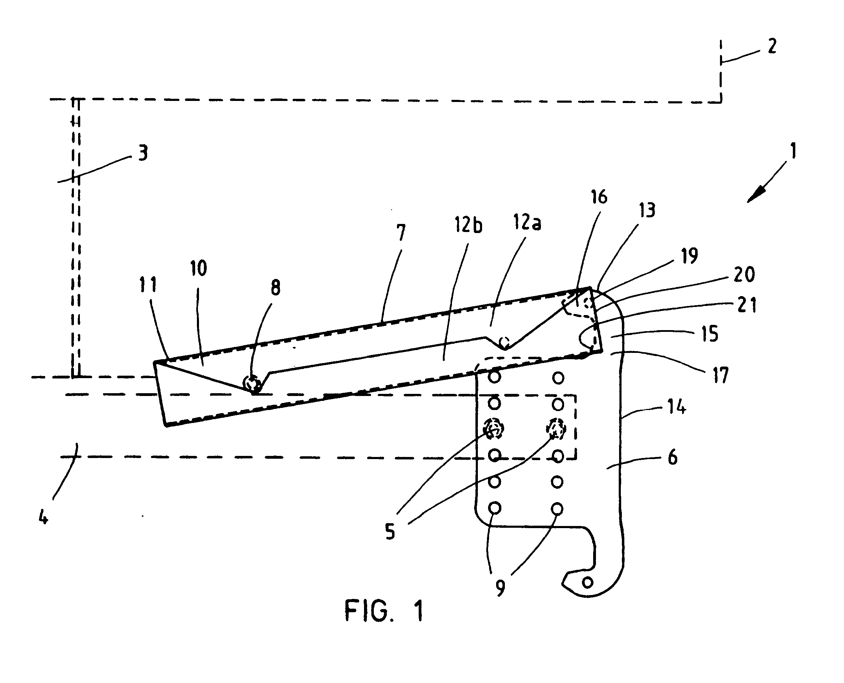

Figures 1 - 4 illustrate one preferred side valance system 1 of the invention in a variety positions, depicted in the lengthwise direction of a vehicle. The Figures distinguish a truck platform 2, a frame member 3, a chassis cross-beam 4, a counter-element 6 attached to the cross-beam with bolts 5, a movable protection panel 7, and a hinge element or a journal 8 attached thereto. The protection panel 7 is elongated in the lengthwise direction of the vehicle. There are a necessary number of counter-elements 6 and hinge journals 8 along the length of the protection panel 7, usually at least two, one at each end of the protection panel 7. Since all counter-elements and hinge journals of the invention are identical in terms of the operating principles thereof, the Figures only depict the function of single ones.

The counter-element 6 is attached removably to the cross-beam 4 with two bolts 5. The counter-element is provided with six pairs of bolt holes 9 in order to make the height of the protection panel 7 from the ground readily adjustable by relocating the bolts 5 in desired holes 9.

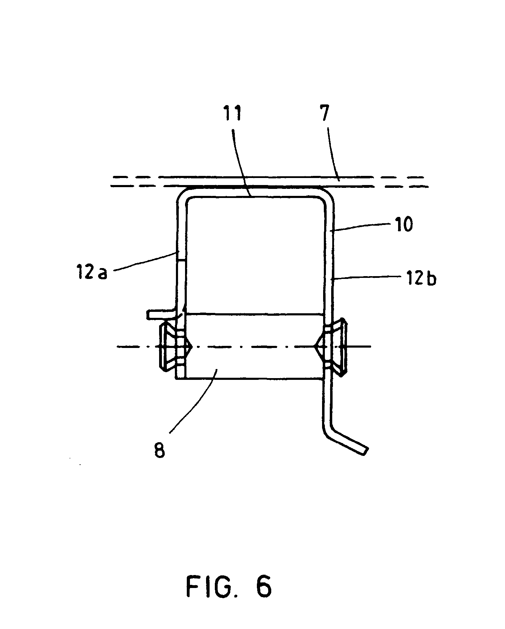

In order to simplify the Figures, the only completely visualized section of the protection panel 7 is a rail member 10 included therein, which is designed to be compatible with the counter-element 6. The rail member 10 has its cross-section shown in Figure 6 at the hinge journal 8 attached thereto. The rail 10 is in the shape of a U-section adapted to open towards the counter-element 6, said counter-element 6 being adapted to travel in a channel constituted by said U. Thus, in Figures 1 - 4, the U has its bottom 11 adapted to face away from the counter-element 6, and part of the counter-element 6 lies between legs 12a and 12b of the U. The protection panel 7 is attached to the bottom 11 of the U-section, to its outer surface. The hinge journal 8 extends through the entire section in such a way that a clearance is left between the hinge journal 8 and the bottom 11 of the U-section. The rail element has its legs 12a and 12b adapted to guide the movement of the protection panel 7 such that, as the protection panel 7 is conveyed to and from a maintenance position, the legs 12a and 12b slide along the beam 4 of the chassis.

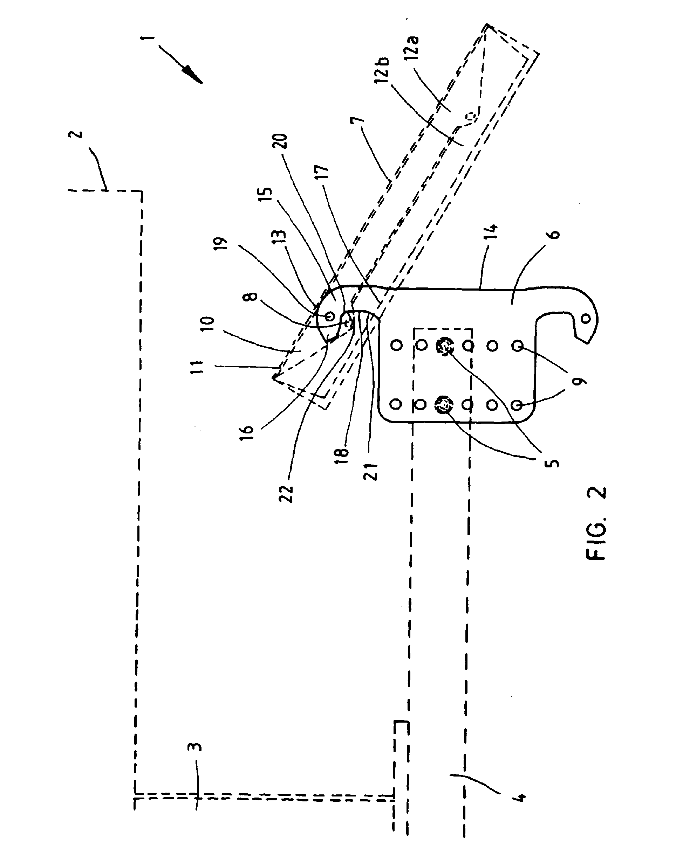

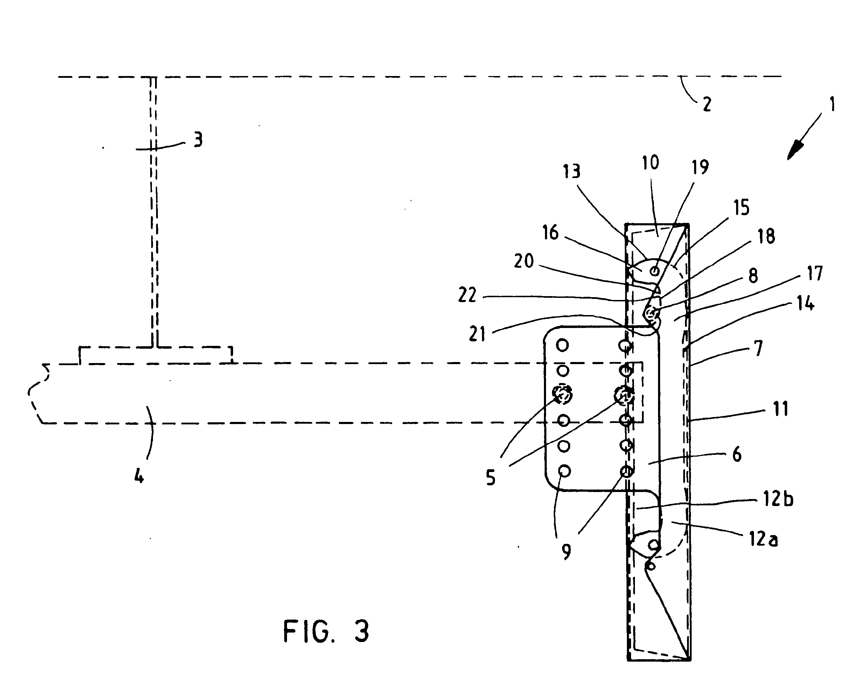

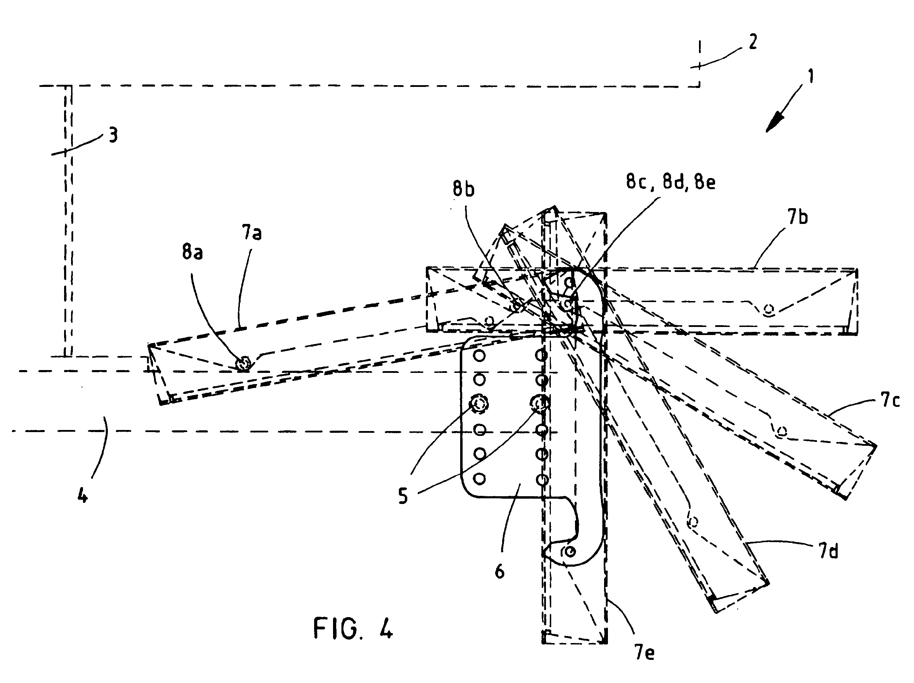

Tracking the sequence of images constituted by Figures 1, 2, and 3 and the sequence of the several positions in Figure 4 reveals how the rail 10 of a protection panel is sort of slid against a curved top edge 13 of the counter-element as the protection panel 7 is conveyed from a maintenance position shown in Figure 1 through the pivoting position shown in Figure 2 to a locking position shown in Figure 3. The counter-element 6 is manufactured from a plate-like material. In order to obtain a larger sliding surface between the counter-element 6 and the rail 10 of the protection panel and to make the counter-element 6 more robust, the counter-element has its top edge 13 bent to a right angle with respect to the general direction of the counter-element. A substantially vertical leading edge 14 of the counter-element, against which the protection panel 7 settles in the locking position, is also bent in a respective fashion.

It can be noted from the Figures that the counter-element 6 is symmetrical relative to a horizontal plane. It has both ends provided with a bracket 15. Thus, the counter-element 6 can be installed in either way. The bracket 15 is in the form of a hook, such that its end 16 faces towards the chassis of the vehicle. Following a more or less horizontal short section, the bracket 15 curves into a vertical section of a substantially uniform width. The vertical section has its bottom end 17 designed to broaden in such a way that the leading edge 14 intended against the protection panel 7 is substantially vertical, while a trailing edge 18, which faces towards the chassis of the vehicle, is designed as wedging towards the vehicle chassis.

In the maintenance position shown in Figure 1, the protection panel 7 rests upon the bracket 15 and the beam 4. The protection panel 7 is now completely removable by lifting it away. The bracket 15 is provided with a hole 19, in which the locking means (not shown) can be inserted for locking the protection panel 7 in the maintenance position, e.g. for the duration of a railway transport. In Figure 4, a protection panel 7a is shown in the maintenance position and the location for a hinge journal of the protection panel 7a is indicated by number 8a.

When a transfer of the protection panel 7 is started from the maintenance position towards the position of Figure 2, the bracket 15 of the counter-element is guided in between the hinge journal 8 fixed to the rail member and the bottom 11 of the rail member. Thus, in terms of its height, the bracket 15 is slightly smaller than said clearance. Figure 4 depicts a protection panel 7b, along with its hinge journal 8b, presently in this stage. When the hinge journal 8 has reached more or less the position shown in Figure 2, the curvature of the top edge 13 of the bracket of a counter-element begins to allow pivoting of the protection panel towards a vertical position. By virtue of the design of the counter-element 6, the protection panel 7 is pivotable to a vertical position while the hinge journal 8 remains more or less stationary in an elbow 20 formed by the trailing edge 18 of the counter-element. This condition of the hinge journal 8 and the protection panel 7 is referred to as the pivoting position. Figure 4 shows the protection panels 7c, 7d, and 7e at different positions in the pivoting position. Respective hinge journals 8c, 8d, and 8e are all depicted at the same spot.

The protection means 7e shown in Figure 4 is locked into the driving position shown in Figure 3 by shifting the protection panel 7 vertically downwards. Since the bracket 15 has its vertical section broaden in a downward direction, the trailing edge of a counter-element, which is wedge-shaped in its lower portion 21, conveys the hinge journal 8 and, thus, the entire rail 10 and the protection panel 7 towards the counter-element 6. Since the bracket 15 of the counter-element has a vertical section which in its bottom end 17 is wider than the clearance between the hinge journal 8 and the bottom 11 of the rail member, the protection panel 7 is ultimately locked against the vertical leading edge 14 of the counter-element. When the hinge journal 8 is in this locking position, the protection panel 7 is in a driving position and cannot be pivoted anywhere in this position. The protection panel is retained in the driving position by gravity, as well as by a friction produced by wedging between the rail 10 and the leading edge 14 of the counter-element.

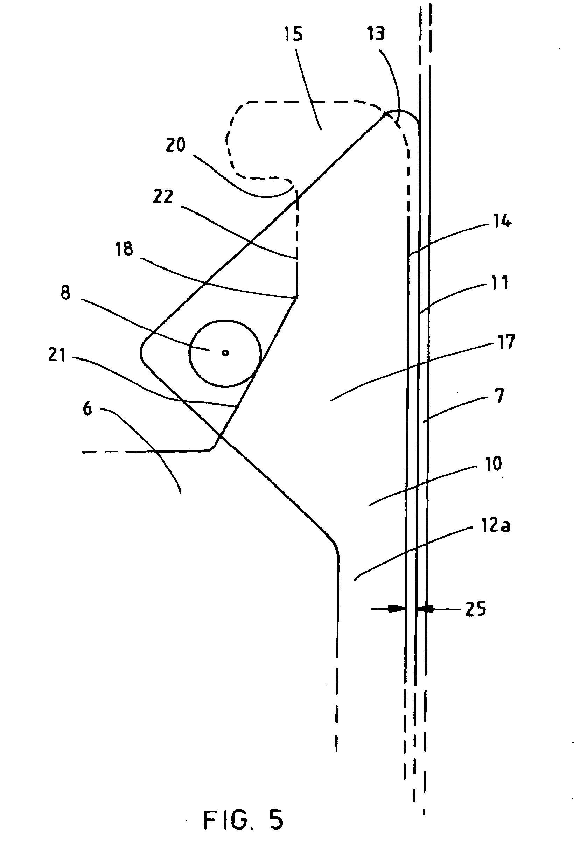

Figure 5 shows another embodiment according to the invention in a highly schematic view of principle, depicting in more detail the above-described principle of attachment by wedging. In Figure 5, between the rail 10 of the protection panel and the leading edge 14 of the counter-element is a clearance 25, i.e. the elements have not yet locked to each other. If the rail 10 were to be shifted slightly downward, the wedge-shaped element would shift the hinge journal 8 and, thus, also the rail 10 to the left in the figure until the rail 10 and the leading edge 14 of the counter-element come to contact with each other and become locked.

The inventive design of the counter-element 6 bears a crucial significance to the functionality of the side valance system 1. The steepness of the wedge-shaped portion 21 determines a wedging force by which the elements are locked. The more gentle is the angle defined between the plane of a vertical upper section 22 of the trailing edge of a counter-element and the wedge-shaped portion 21 of the lower section of the trailing edge, the tighter will be the locking between the counter-element 6 and the protection panel 7. Preferably, said angle is within the range of 20° - 45°, the angle being about 30° in the preferred example of Figures 1 - 4. The wedge surface 21 can also be of different design than the embodiments shown in the Figures.

When it is desirable to re-open the protection panel 7 for the maintenance position, it must be first moved upwards to the pivoting position, and then further to the maintenance position. Practice has demonstrated that the inventive protection panel 7 is locked with a suitable tightness, such that said locking of the panel 7 can be manually released.

In the illustrated examples, the hinge journal 8 is attached to the rail member 10 of the protection panel and the counter-element 6 to the beam 4. The invention functions just as well with the hinge journal 8 attached to the chassis support structure of the vehicle and the counter-element 6 attached to the protection panel 7.

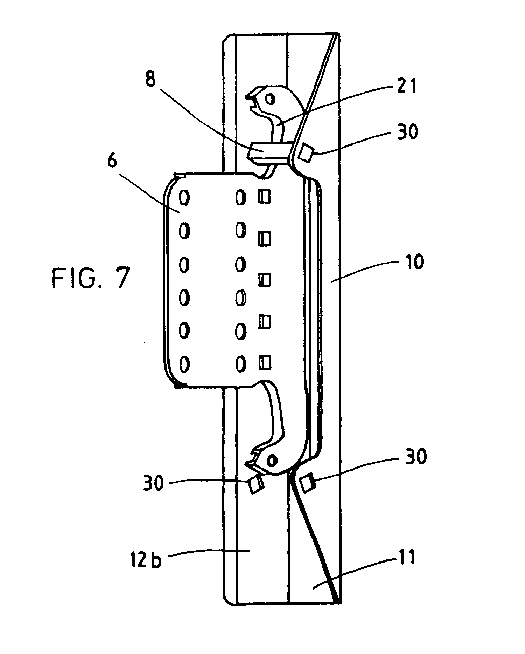

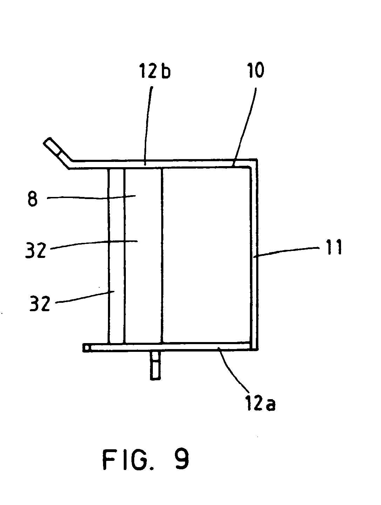

The third embodiment shown in Figures 7, 8 and 9 correspond mainly in its structure and functioning the side valance systems described above. In the following are illustrated only the most important differencies of this third embodiment compared to the above described embodiments and meaning of these differencies. For the sake of clarity, Figures 7 - 9 do not show all reference numbers corresponding the parts already shown in Figures 1 - 6. Same reference numbers are used for the parts corresponding each other.

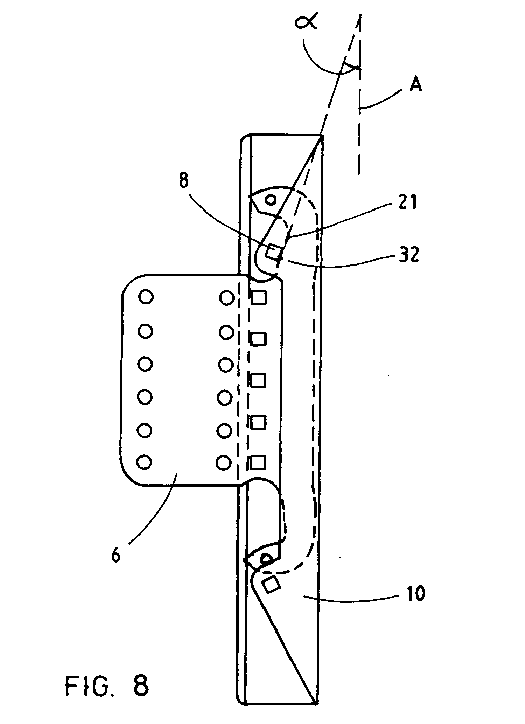

Figure 7 shows an embodiment in which the hinge journal 8 is squared in its cross section. Squared apertures 30 are formed into the legs 12a and 12b of the rail member 10 for the hinge journal 8. Typically the squared hinge journal 8 is unable to move around its axis, but the straight surfaces 32 of the journal are mounted in exact angles relative to the rail member 10. Figure 8 shows a preferable such angle α. The surface 32 of the hinge journal that sets in the driving position against the locking shape 21 of the counter-element 6, forms with a vertical line A an angle α which differs from a right angle. This angle α is typically less than 45 degrees, preferably 1 - 40 degrees, more preferably 5 - 30 degrees or 15 - 25 degrees. By means of this angle α and a suitable shaping of the surface 21 of the counter-element the wedging according to the invention becomes efficient.

There is no intention to limit the invention to just the embodiments described in the foregoing specification, but the invention can be varied within the scope as defined in the patent claims.

## Claims

1. A side valance system (1) to be arranged alongside a vehicle (2, 3, 4), comprising a protection means (7) and support means (6, 8) to be attached to the vehicle (4) and to the protection means (7), supported by which the protection means (7) is movable between at least two positions, namely
- a driving position, where the protection means (7) is arranged alongside the vehicle for blocking access under the vehicle, and
- a maintenance position, where the protection means (7) is arranged essentially for providing access under the vehicle,
said support means comprising at least a hinge element (8) and a counter-element (6) therefor, which are arranged pivotally with respect to each other for moving the protection means (7) relative to the vehicle (2, 3, 4),
said counter-element (6) is provided with an abutting surface (18), along which the hinge element (8) is arranged to be movable relative to the counter-element (6) between at least two positions, namely
- a pivoting position, where the hinge element (8) is pivotable relative to the counter-element (6) and thus said protection means (7) is also pivotable relative to the vehicle (2, 3, 4), and
- a locking position, where the hinge element (8) is set during the driving position and where pivoting of the hinge element (8) relative to the counter-element (6) and, thus, said pivoting of the protection means (7) as well, is
prevented by means of a locking shape (21),
**characterized in that** the locking shape comprises a wedge surface (21), arranged on the abutting surface (18) of the counter-element (6), whereby the prevention of the pivotal movement of the hinge element (8) and the counter-element (6) in the locking position is arranged by wedging.

2. A side valance system as set forth in claim 1, **characterized in that** a locking shape is also formed in the hinge element (8).

3. A side valance system as set forth in claim 1 or 2, **characterized in that** the hinge element (8) is at a lower level in the locking position than in the pivoting position, and the hinge element (8) is arranged to remain in the locking position gravitationally, with the protection means (7) thus locked in the driving position.

4. A side valance system as set forth in any of the preceding claims, **characterized in that** the hinge element (8) has at least one mainly planar surface (32), which surface (32) is arranged in the locking position against the abutting surface (18) of the counter-element,

5. A side valance system as set forth in claim 4, **characterized in that** the planar surface (32) that is against the abutting surface (18) of the counter-element, in the locking position, forms an angle (α) with a vertical (A), which angle (α) typically is less than 45 degrees, preferably 1 - 40 degrees, more preferably 5 - 30 degrees or 15 - 25 degrees.

6. A side valance system as set forth in any of the preceding claims, **characterized in that** the abutting surface (18) is partially open, such that in the pivoting position the hinge element (8) is releasable from the abutting surface (18) and from the counter-element (6) for setting the protection means (7) in the maintenance position.

7. A side valance system as set forth in any of the preceding claims, **characterized in that** the abutting surface (18) is partially open, such that in the pivoting position the hinge element (8) is releasable from the abutting surface (18) and from the counter-element (6) for removing completely the protection means (7) from some of its support means (6).

8. A side valance system as set forth in any of the preceding claims, **characterized in that** the counter-element (6) is attached securely to the chassis (3, 4) of the vehicle and the hinge element (8) is attached securely to the protection means (7, 10).

9. A side valance system as set forth in claim 8, **characterized in that** the counter-element has its wedge surface (21) arranged in the driving position to force the hinge element (8) and the protection means (7) towards the vehicle (3, 4) and thus to provide wedging of the counter-element (6) against the protection means (7, 10).

10. A side valance system as set forth in claim 8 or 9, **characterized in that** the counter-element (6) is secured by means of a fastening element (5) releasably to the chassis (4) and the counter-element (6) is provided with a number of attachment points (9) for the fastening element set at various heights for adjusting the height between the protection means (7) and the ground.

11. A side valance system as set forth in any of the preceding claims, **characterized in that** the counter-element (6) is in the shape of a plate-like element set perpendicularly to the travelling direction of the vehicle (2, 3, 4), against whose edge (13, 14) the protection means (7, 10) is supported in the driving or maintenance position, or during its movement between these positions.

12. A side valance system as set forth in claim 11, **characterized in that**, in order to broaden the abutting surface between the counter-element (6) and the protection means (7, 10), the plate-like counter-element has its edges (13, 14, 18) bent over at least a portion (13, 14) of the section adapted to support the protection means.

13. A side valance system as set forth in any of the preceding claims, **characterized in that** the counter-element (6) is substantially symmetrical in shape relative to a horizontal plane extending through the counter-element (6) which is in the driving position.

14. A side valance system as set forth in any of the preceding claims, **characterized in that** the protection means (7) is plate-like.

15. A method for locking a side valance system (1) to be arranged alongside a vehicle (2, 3, 4) into the driving position, which side valance system comprises a protection means (7) and support means (6, 8) to be attached to the vehicle (4) and to the protection means (7), supported by which the protection means (7) is movable between at least two positions, namely
- a driving position, where the protection means (7) is arranged alongside the vehicle for blocking access under the vehicle, and
- a maintenance position, where the protection means (7) is arranged essentially for providing access under the vehicle,
said support means comprising at least a hinge element (8) and a counter-element (6) therefor, which are arranged pivotally with respect to each other for moving the protection means (7) relative to the vehicle (2, 3, 4), said counter-element (6) is provided with an abutting surface (18), against which the hinge element (8) is arranged to be movable relative to the counter-element (6) between at least two positions, namely
- a pivoting position, where the hinge element (8) is pivotable relative to the counter-element (6) and thus said protection means (7) is also pivotable relative to the vehicle (2, 3, 4), and
- a locking position, where the hinge element (8) is set during the driving position and in which pivoting of the hinge element (8) relative to the counter-element (6) and, thus, said pivoting of the protection means (7) as well, is prevented,
**characterized in that** the side valance system (1) is locked into the driving position by moving the hinge element and the counter-element in relation to each other from the pivoting position into the locking position so that the locking shape (21) which comprises a wedge surface (21) arranged on the abutting surface (18) of the counter-element (6) stops said moving and at the same the locking shape locks the counter-element (6) and the hinge element (8) in relation to each other.

## Patentansprüche

1. Seitenunterfahrschutzsystem (1) zur Anordnung entlang eines Fahrzeugs (2, 3, 4), umfassend ein Schutzmittel (7) und Halterungsmittel (6, 8) zur Anbringung an dem Fahrzeug (4) und dem Schutzmittel (7), durch welche gehalten das Schutzmittel (7) zwischen wenigstens zwei Positionen beweglich ist, nämlich
- einer Fahrposition, in welcher das Schutzmittel (7) entlang des Fahrzeugs angeordnet ist, um einen Zugang unter das Fahrzeug zu versperren, und
- einer Wartungsposition, in welcher das Schutzmittel (7) im Wesentlichen dazu angeordnet ist, einen Zugang unter das Fahrzeug bereitzustellen,
wobei die Halterungsmittel wenigstens ein Gelenkelement (8) und ein Gegenelement (6) dafür umfassen, welche relativ zueinander schwenkbar angeordnet sind, um das Schutzmittel (7) relativ zu dem Fahrzeug (2, 3, 4) zu bewegen,
wobei das Gegenelement (6) mit einer Anschlagfläche (18) versehen ist, entlang welcher das Gelenkelement (8) angeordnet ist, relativ zu dem Gegenelement (6) zwischen wenigstens zwei Positionen beweglich zu sein, nämlich
- einer Schwenkposition, in welcher das Gelenkelement (8) relativ zu dem Gegenelement (6) schwenkbar ist und somit das Schutzmittel (7) ebenfalls relativ schwenkbar zu dem Fahrzeug (2, 3, 4) ist, und
- einer Verriegelungsposition, in welche das Gelenkelement (8) während der Fahrposition gesetzt wird und in welcher ein Schwenken des Gelenkelements (8) relativ zu dem Gegenelement (6) und somit auch das Schwenken des Schutzmittels (7) mittels einer Verriegelungsform (21) verhindert wird,
**dadurch gekennzeichnet, dass** die Verriegelungsform eine Keilfläche (21) umfasst, welche auf der Anschlagfläche (18) des Gegenelements (6) angeordnet ist, wodurch das Verhindern der Schwenkbewegung des Gelenkelements (8) und des Gegenelements (6) in der Verriegelungsposition durch Verkeilen bewerkstelligt wird.

2. Seitenunterfahrschutzsystem nach Anspruch 1, **dadurch gekennzeichnet, dass** auch in dem Gelenkelement (8) eine Verriegelungsform ausgebildet ist.

3. Seitenunterfahrschutzsystem nach Anspruch 1 oder 2, **dadurch gekennzeichnet, dass** das Gelenkelement (8) in der Verriegelungsposition auf einer niedrigeren Ebene ist als in der Schwenkposition und das Gelenkelement (8) dazu ausgestaltet ist, durch Schwerkraft in der Verriegelungsposition zu bleiben, wobei das Schutzmittel (7) **dadurch** in der Fahrposition verriegelt wird.

4. Seitenunterfahrschutzsystem nach einem der vorhergehenden Ansprüche, **dadurch gekennzeichnet, dass** das Gelenkelement (8) wenigstens eine hauptsächlich ebene Oberfläche (32) aufweist, wobei die Oberfläche (32) in der Verriegelungsposition an der Anschlagfläche (18) des Gegenelements angeordnet ist.

5. Seitenunterfahrschutzsystem nach Anspruch 4, **dadurch gekennzeichnet, dass** die ebene Oberfläche (32), welche an der Anschlagfläche (18) des Gegenelements ist, in der Verriegelungsposition einen Winkel (α) mit einer Vertikalen (A) bildet, wobei der Winkel (α) typischerweise weniger als 45 Grad, vorzugsweise 1-40 Grad, stärker bevorzugt 5-30 Grad oder 15-25 Grad ist.

6. Seitenunterfahrschutzsystem nach einem der vorhergehenden Ansprüche,
**dadurch gekennzeichnet, dass** die Anschlagfläche (18) teilweise offen ist, so dass in der Schwenkposition das Gelenkelement (8) von der Anschlagfläche (18) und von dem Gegenelement (6) lösbar ist, um das Schutzmittel (7) in die Wartungsposition zu setzen.

7. Seitenunterfahrschutzsystem nach einem der vorhergehenden Ansprüche, **dadurch gekennzeichnet, dass** die Anschlagfläche (18) teilweise offen ist, so dass in der Schwenkposition das Gelenkelement (8) von der Anschlagfläche (18) und von dem Gegenelement (6) lösbar ist, um das Schutzmittel (7) vollständig von einigen seiner Halterungsmittel (6) zu entfernen.

8. Seitenunterfahrschutzsystem nach einem der vorhergehenden Ansprüche, **dadurch gekennzeichnet, dass** das Gegenelement (6) fest an dem Fahrgestell (3, 4) des Fahrzeugs angebracht ist und das Gelenkelement (8) fest an dem Schutzmittel (7, 10) angebracht ist.

9. Seitenunterfahrschutzsystem nach Anspruch 8, **dadurch gekennzeichnet, dass** das Gegenelement seine Keilfläche (21) in der Fahrposition so angeordnet hat, dass das Gelenkelement (8) und das Schutzmittel (7) in Richtung des Fahrzeugs (3, 4) gedrängt werden und somit ein Verkeilen des Gegenelements (6) gegen das Schutzmittel (7, 10) gewährleistet wird.

10. Seitenunterfahrschutzsystem nach Anspruch 8 oder 9, **dadurch gekennzeichnet, dass** das Gegenelement (6) mittels eines Befestigungselements (5) lösbar an dem Fahrgestell (4) befestigt ist und das Gegenelement (6) mit einer Anzahl von Anbringungspunkten (9) für das Befestigungselement versehen ist, welche auf verschiedene Höhen gesetzt sind, um die Höhe zwischen dem Schutzmittel (7) und dem Boden einzustellen.

11. Seitenunterfahrschutzsystem nach einem der vorhergehenden Ansprüche,
**dadurch gekennzeichnet, dass** das Gegenelement (6) die Form eines plattenartigen Elements hat, welches senkrecht zu der Bewegungsrichtung des Fahrzeugs (2, 3, 4) eingesetzt ist, an dessen Kante (13, 14) das Schutzmittel (7, 10) in der Fahr- oder Wartungsposition oder während seiner Bewegung zwischen diesen Positionen gelagert ist.

12. Seitenunterfahrschutzsystem nach Anspruch 11, **dadurch gekennzeichnet, dass**, um die Anschlagfläche zwischen dem Gegenelement (6) und dem Schutzmittel (7, 10) zu vergrößern, das plattenartige Gegenelement seine Kante (13, 14, 18) über wenigstens einen Abschnitt (13, 14) des Bereichs gebogen hat, welcher dazu ausgestaltet ist, das Schutzmittel zu lagern.

13. Seitenunterfahrschutzsystem nach einem der vorhergehenden Ansprüche,
**dadurch gekennzeichnet, dass** das Gegenelement (6) in der Form im Wesentlichen symmetrisch zu einer horizontalen Ebene ist, welche sich durch das Gegenelement (6), welches in der Fahrposition ist, erstreckt.

14. Seitenunterfahrschutzsystem nach einem der vorhergehenden Ansprüche, **dadurch gekennzeichnet, dass** das Schutzmittel (7) plattenartig ist.

15. Verfahren zum Verriegeln eines Seitenunterfahrschutzsystems (1) zur Anordnung entlang eines Fahrzeugs (2, 3, 4) in der Fahrposition, wobei das Seitenunterfahrschutzsystem ein Schutzmittel (7) und Halterungsmittel (6, 8) zur Anbringung an dem Fahrzeug (4) und dem Schutzmittel (7) umfasst, durch welche gehalten das Schutzmittel (7) zwischen wenigstens zwei Positionen beweglich ist, nämlich
- einer Fahrposition, in welcher das Schutzmittel (7) entlang des Fahrzeugs angeordnet ist, um einen Zugang unter das Fahrzeug zu versperren, und
- einer Wartungsposition, in welcher das Schutzmittel (7) im Wesentlichen dazu angeordnet ist, einen Zugang unter das Fahrzeug bereitzustellen,
wobei die Halterungsmittel wenigstens ein Gelenkelement (8) und ein Gegenelement (6) dafür umfassen, welche relativ zueinander schwenkbar sind, um das Schutzmittel (7) relativ zu dem Fahrzeug (2, 3, 4) zu bewegen,
wobei das Gegenelement (6) mit einer Anschlagfläche (18) versehen ist, an welcher das Gelenkelement (8) angeordnet ist, relativ zu dem Gegenelement (6) zwischen wenigstens zwei Positionen beweglich zu sein, nämlich
- einer Schwenkposition, in welcher das Gelenkelement (8) relativ zu dem Gegenelement (6) schwenkbar ist und somit das Schutzmittel (7) ebenfalls relativ zu dem Fahrzeug (2, 3, 4) schwenkbar ist, und
- einer Verriegelungsposition, in welche das Gelenkelement (8) während der Fahrposition gesetzt wird und in welcher ein Schwenken des Gelenkelements (8) relativ zu dem Gegenelement (6) und somit auch das Schwenken des Schutzmittels (7) verhindert wird,
**dadurch gekennzeichnet, dass** das Seitenunterfahrschutzsystem (1) in der Fahrposition verriegelt wird, indem das Gelenkelement und das Gegenelement im Verhältnis zueinander von der Schwenkposition in die Verriegelungsposition bewegt werden, so dass eine Verriegelungsform (21), welche eine auf der Anschlagfläche (18) des Gegenelements (6) angeordnete Keilfläche (21) umfasst, die Bewegung anhält und zugleich die Verriegelungsform das Gegenelement (6) und das Gelenkelement (8) im Verhältnis zueinander verriegelt.

## Revendications

1. Système de tablier latéral (1) à disposer le long d'un véhicule (2, 3, 4), comprenant un moyen de protection (7) et des moyens de support (6, 8) à fixer au véhicule (4) et au moyen de protection (7), support grâce auquel le moyen de protection (7) peut être déplacé entre au moins deux positions, à savoir
- une position de conduite, dans laquelle le moyen de protection (7) est disposé le long du véhicule pour bloquer l'accès en dessous du véhicule, et
- une position d'entretien, dans laquelle le moyen de protection (7) est essentiellement disposé pour permettre l'accès en dessous du véhicule,
lesdits moyens de support comprenant au moins un élément de charnière (8) et un contre-élément (6) pour celui-ci, qui sont disposés de manière pivotante l'un par rapport à l'autre pour déplacer le moyen de protection (7) par rapport au véhicule (2, 3, 4),
ledit contre-élément (6) est pourvu d'une surface de butée (18), le long de laquelle l'élément de charnière (8) est disposé pour pouvoir être déplacé par rapport au contre-élément (6) entre au moins deux positions, à savoir
- une position de pivotement, dans laquelle l'élément de charnière (8) peut pivoter par rapport au contre-élément (6) et, ainsi, ledit moyen de protection (7) peut également pivoter par rapport au véhicule (2, 3, 4), et
- une position de verrouillage, dans laquelle l'élément de charnière (8) est mis pendant la position de conduite et dans laquelle le pivotement de l'élément de charnière (8) par rapport au contre-élément (6) et, ainsi, ledit pivotement du moyen de protection (7), sont bloqués au moyen d'un profilé de verrouillage (21),
**caractérisé en ce que** le profilé de verrouillage comprend une surface cunéiforme (21) disposée sur la surface de butée (18) du contre-élément (6), de sorte que le blocage du mouvement de pivotement de l'élément de charnière (8) et du contre-élément (6) dans la position de verrouillage est prévu par calage.

2. Système de tablier latéral selon la revendication 1, **caractérisé en ce qu'**un profilé de verrouillage est également formé dans l'élément de charnière (8).

3. Système de tablier latéral selon la revendication 1 ou 2, **caractérisé en ce que** l'élément de charnière (8) se trouve à un niveau inférieur dans la position de verrouillage que dans la position de pivotement, et l'élément de charnière (8) est prévu pour rester dans la position de verrouillage sous l'effet de la gravité, avec le moyen de protection (7) ainsi verrouillé dans la position de conduite.

4. Système de tablier latéral selon l'une quelconque des revendications précédentes, **caractérisé en ce que** l'élément de charnière (8) a au moins une surface principalement plane (32), laquelle surface (32) est disposée, dans la position de verrouillage, contre la surface de butée (18) du contre-élément.

5. Système de tablier latéral selon la revendication 4,
**caractérisé en ce que** la surface plane (32) qui, dans la position de verrouillage, se trouve contre la surface de butée (18) du contre-élément, forme un angle (α) avec une verticale (A), lequel angle (α) est généralement inférieur à 45 degrés, de préférence de 1 à 40 degrés, de manière plus particulièrement préférée de 5 à 30 degrés ou de 15 à 25 degrés.

6. Système de tablier latéral selon l'une quelconque des revendications précédentes, **caractérisé en ce que** la surface de butée (18) est partiellement ouverte, de sorte que dans la position de pivotement, l'élément de charnière (8) peut être dégagé de la surface de butée (18) et du contre-élément (6) pour mettre le moyen de protection (7) dans la position d'entretien.

7. Système de tablier latéral selon l'une quelconque des revendications précédentes, **caractérisé en ce que** la surface de butée (18) est partiellement ouverte, de sorte que dans la position de pivotement, l'élément de charnière (8) peut être dégagé de la surface de butée (18) et du contre-élément (6) pour retirer complètement le moyen de protection (7) d'une partie de ses moyens de support (6).

8. Système de tablier latéral selon l'une quelconque des revendications précédentes, **caractérisé en ce que** le contre-élément (6) est solidement fixé au châssis (3, 4) du véhicule et l'élément de charnière (8) est solidement fixé au moyen de protection (7, 10).

9. Système de tablier latéral selon la revendication 8, **caractérisé en ce que** le contre-élément a sa surface cunéiforme (21) disposée dans la position de conduite pour forcer l'élément de charnière (8) et le moyen de protection (7) vers le véhicule (3, 4) et permettre ainsi un calage du contre-élément (6) contre le moyen de protection (7, 10).

10. Système de tablier latéral selon la revendication 8 ou 9, **caractérisé en ce que** le contre-élément (6) est fixé de manière amovible au châssis (4) au moyen d'un élément de fixation (5), et le contre-élément (6) est pourvu d'un certain nombre de points de fixation (9) pour régler l'élément de fixation à diverses hauteurs afin d'ajuster la hauteur entre le moyen de protection (7) et le sol.

11. Système de tablier latéral selon l'une quelconque des revendications précédentes, **caractérisé en ce que** le contre-élément (6) est sous la forme d'un élément analogue à une plaque, placé perpendiculairement au sens de la marche du véhicule (2, 3, 4), contre le bord (13, 14) duquel le moyen de protection (7, 10) est supporté dans la position de conduite ou d'entretien, ou pendant son déplacement entre ces positions.

12. Système de tablier latéral selon la revendication 11, **caractérisé en ce que**, pour élargir la surface de butée entre le contre-élément (6) et le moyen de protection (7, 10), le contre-élément analogue à une plaque a ses bords (13, 14, 18) courbés sur au moins une partie (13, 14) de la section adaptée pour supporter le moyen de protection.

13. Système de tablier latéral selon l'une quelconque des revendications précédentes, **caractérisé en ce que** le contre-élément (6) est de forme essentiellement symétrique par rapport à un plan horizontal s'étendant à travers le contre-élément (6) qui est dans la position de conduite.

14. Système de tablier latéral selon l'une quelconque des revendications précédentes, **caractérisé en ce que** le moyen de protection (7) est analogue à une plaque.

15. Procédé de verrouillage d'un système de tablier latéral (1) à disposer le long d'un véhicule (2, 3, 4) dans la position de conduite, lequel système de tablier latéral comprend un moyen de protection (7) et des moyens de support (6, 8) à fixer au véhicule (4) et au moyen de protection (7), support grâce auquel le moyen de protection (7) peut être déplacé entre au moins deux positions, à savoir
- une position de conduite, dans laquelle le moyen de protection (7) est disposé le long du véhicule pour bloquer l'accès en dessous du véhicule, et
- une position d'entretien, dans laquelle le moyen de protection (7) est essentiellement disposé pour permettre l'accès en dessous du véhicule,
lesdits moyens de support comprenant au moins un élément de charnière (8) et un contre-élément (6) pour celui-ci, qui sont disposés de manière pivotante l'un par rapport à l'autre pour déplacer le moyen de protection (7) par rapport au véhicule (2,3, 4),
ledit contre-élément (6) est pourvu d'une surface de butée (18), contre laquelle l'élément de charnière (8) est disposé pour pouvoir être déplacé par rapport au contre-élément (6) entre au moins deux positions, à savoir
- une position de pivotement, dans laquelle l'élément de charnière (8) peut pivoter par rapport au contre-élément (6) et, ainsi, ledit moyen de protection (7) peut également pivoter par rapport au véhicule (2, 3, 4), et
- une position de verrouillage, dans laquelle l'élément de charnière (8) est mis pendant la position de conduite et dans laquelle le pivotement de l'élément de charnière (8) par rapport au contre-élément (6) et, ainsi, ledit pivotement du moyen de protection (7), est aussi empêché,
**caractérisé en ce que** le système de tablier latéral (1) est verrouillé dans la position de conduite en déplaçant l'élément de charnière et le contre-élément l'un par rapport à l'autre de la position de pivotement à la position de verrouillage, de sorte qu'un profilé de verrouillage (21) qui comprend une surface cunéiforme (21) disposée sur la surface de butée (18) du contre-élément (6) bloque ledit déplacement et en même temps, le profilé de verrouillage verrouille le contre-élément (6) et l'élément de charnière (8) l'un par rapport à l'autre.
